# EUROPEAN PATENT SPECIFICATION

(11) **EP 3 243 750 B1**
(45) Date of publication and mention of the grant of the patent: **08.07.2020**
(21) Application number: 17170905.8
(22) Date of filing: 12.05.2017
(51) Int. Cl.: B64C 39/06, B64D 35/04, B64C 27/26, B64C 11/46, B64C 27/30

(54) **DISTRIBUTED PROPULSION**
VERTEILTER ANTRIEB
PROPULSION RÉPARTIE

(30) Priority: 13.05.2016 US 201662336290 P; 13.05.2016 US 201662336420 P
(43) Date of publication of application: 15.11.2017
(73) Proprietor: Bell Helicopter Textron Inc., Fort Worth, TX 76101 (US)
(72) Inventor: FENNY, Carlos Alexander, Fort Worth, TX Texas 76112 (US); OLSON, Rohn Lee, Hurst, TX Texas 76054 (US); ZAHASKY, Andrew James, North Richland Hills, TX Texas 76180 (US)
(74) Representative: Barker Brettell LLP

(56) References cited:
- WO-A1-2016/068784
- GB-A- 1 085 541
- GB-A- 1 281 382
- JP-A- 2014 240 242
- US-A- 3 350 035
- US-A- 5 595 358
- US-A1- 2013 214 086
- US-A1- 2016 026 190
- US-A1- 2016 107 751
- Li Perry ET AL: "Systems review exercise @BULLET To be posted this weekend @BULLET Due next Friday (3/6) Coming week: @BULLET Lab 13: Hydraulic Power Steering @BULLET Lab 14: Integrated Lab (Hydraulic test bench) Topics today: @BULLET Pumps and motors @BULLET (Hydraulic Hybrids)", , 1 January 2004 (2004-01-01), XP055457362, Retrieved from the Internet: URL:http://www.me.umn.edu/courses/me4232/L ectures/Lect6_S15.pdf [retrieved on 2018-03-07]

## Description

### CROSS-REFERENCE TO RELATED APPLICATIONS

This application claims priority to U.S. Provisional Application Serial No. 62/336,290, filed May 13, 2016 and to U.S. Provisional Application Serial No. 62/336,420, filed May 13, 2016.

### STATEMENT OF FEDERALLY FUNDED RESEARCH

None.

### TECHNICAL FIELD OF THE INVENTION

The present invention relates in general to the field of power units for craft, and more particularly, to a distributed propulsion system for use with craft.

### BACKGROUND OF THE INVENTION

Without limiting the scope of the invention, its background is described in connection with aircraft. Based on a classical helicopter configuration improvements in helicopter productivity have been, at best, only incremental. A classical helicopter configuration includes certain fundamental limitations that hamper improvements, e.g., retreating blade stall, blade loading, advancing blade tip Mach number, and the large increases in power that are required with increased speed. These physical limitations contribute to increased vibration resulting poor ride quality and reduced component life. In addition, certain physical limitations lead to increased size and weight.

The classical approach to this problem is to develop helicopters in which these configuration limitations are addressed via ancillary devices, such as wings, additional engines, and propellers. Incorporation of these approaches, due to their increased complexity and weight, reduces the economic load carrying capability of the helicopter and raises questions as to the safety of operation of the helicopter and its long term reliability. Although the development of compound helicopters with wings, additional engines, and propellers represents significant improvements in helicopter productivity, considerable shortcomings remain.

WO2016/068784A1 discloses a multi-rotor aerial vehicle comprising, at least a first, second and third rotor, each rotatable by a dedicated first second and third hydraulic motor, a power unit, at least a first, second and third hydraulic pump dedicated to the respective first, second and third hydraulic motor, wherein each hydraulic pump is arranged to provide pressurized fluid to each hydraulic motor for powering the hydraulic motor and thereby rotating the respective rotor, a control unit for controlling the operation of the multi-rotor aerial vehicle, wherein the control of the multi-rotor aerial vehicle is arranged to be performed by altering the flow of pressurized fluid distributed to each respective hydraulic motor, wherein, wherein the flow of pressurized fluid provided to each hydraulic motor is individually controllable by means of at least one control valve configured to control the flow of pressurized fluid from each hydraulic pump to its dedicated hydraulic motor.

GB1085541A discloses a helicopter having a pair of lifting rotors driven through a hydraulic transmission. An engine and pump unit supply oil to rotary hydraulic motors in series that drive rotors whose axes are inclined towards each other for stability. In another embodiment there are two opposed pairs of rotors, the motors of each pair being in series, and the hydraulic lines by which the body is supported have joints to allow them to be swivelled and stowed. The helicopter has an undercarriage also propelled by hydraulic transmission, and may have a marine propeller for propulsion on water. The helicopter has two internal combustion engines, each driving two pumps supplying opposed sets of motors and rotors, and further engines driving propellers. These propellers may drive the helicopter forwards or backwards and may be used for braking.

US3350035A discloses a tilt-wing vertical take-off and landing aircraft with a cylindrical wing. Rotors attached to the wing provide thrust to propel the aircraft, and provide forces to tilt the wing, achieve aircraft altitude control and stabilize the aircraft in flight.

### SUMMARY OF THE INVENTION

According to an aspect of the invention, there is provided an aircraft capable of vertical take-off and landing, stationary flight and forward flight, as defined in claim 1. According to another aspect of the invention, there is provided a method for distributed propulsion of an aircraft, as defined in claim 10. Optional and/or preferred embodiments are set out in the dependent claims.

### BRIEF DESCRIPTION OF THE DRAWINGS

For a more complete understanding of the features and advantages of the present invention, reference is now made to the detailed description of the invention along with the accompanying figures and in which:
FIG. 1 shows a schematic of a hybrid turboshaft engine hydraulic distributed propulsion system of the present invention.
FIG. 2 shows a schematic of a hybrid internal combustion engine - engine hydraulic distributed propulsion system in accordance with one embodiment of the present invention.
FIG. 3 shows a schematic of a hybrid electric hydraulic distributed propulsion system in accordance with one embodiment of the present invention.
FIG. 4 shows a schematic of a hybrid electric hydraulic with a piezo-electric pump distributed propulsion system in accordance with one embodiment of the present invention.
FIG. 5A is a perspective view of a closed wing aircraft in accordance with one embodiment of the present invention;
FIG. 5B is a front elevation view of the closed wing aircraft of FIG. 5A;
FIG. 5C is a rear elevation view of the closed wing aircraft of FIG. 5A;
FIG. 5D is a right side elevation view of the closed wing aircraft of FIG. 5A;
FIG. 5E is a left side elevation view of the closed wing aircraft of FIG. 5A;
FIG. 5F is a top plan view of the closed wing aircraft of FIG. 5A;
FIG. 5G is a bottom plan view of the closed wing aircraft of FIG. 5A;
FIG. 6A depicts the closed wing aircraft of FIG. 1A in stationary flight (hover mode including vertical take off and landing) in accordance with one embodiment of the present invention;
FIG. 6B depicts the closed wing aircraft of FIG. 1A in transition from stationary flight to forward flight and vice versa in accordance with one embodiment of the present invention;
FIG. 6C depicts the closed wing aircraft of FIG. 1A in forward flight in accordance with one embodiment of the present invention
FIG. 7A is a perspective view of a closed wing aircraft in accordance with one embodiment of the present invention in which the rotors on the spokes are deployed and the rotors on the closed wing are folded forward;
FIG. 7B is a front elevation view of the closed wing aircraft of FIG. 7A;
FIG. 7C is a rear elevation view of the closed wing aircraft of FIG. 7A;
FIG. 7D is a right side elevation view of the closed wing aircraft of FIG. 7A;
FIG. 7E is a left side elevation view of the closed wing aircraft of FIG. 7A;
FIG. 7F is a top plan view of the closed wing aircraft of FIG. 7A;
FIG. 7G is a bottom plan view of the closed wing aircraft of FIG. 7A;
FIG. 8 is a perspective view of a closed wing aircraft in accordance with one embodiment of the present invention in which the rotors on the spokes are deployed and the rotors on the closed wing are folded backward;
FIG. 9A is a perspective view of a closed wing aircraft having a sinusoidal-shaped circular wing in accordance with one embodiment of the present invention;
FIG. 9B is a front elevation view of the closed wing aircraft of FIG. 9A;
FIG. 9C is a rear elevation view of the closed wing aircraft of FIG. 9A;
FIG. 9D is a right side elevation view of the closed wing aircraft of FIG. 9A;
FIG. 9E is a left side elevation view of the closed wing aircraft of FIG. 9A;
FIG. 9F is a top plan view of the closed wing aircraft of FIG. 9A; and
FIG. 9G is a bottom plan view of the closed wing aircraft of FIG. 9A.

### DETAILED DESCRIPTION OF THE INVENTION

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

As used herein, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

In aerospace technology, distributed propulsion is defined as distributing the airflows and forces generated by the propulsion system about an aircraft in a way that improves the vehicle's aerodynamics, propulsive efficiency, structural efficiency, and aeroelasticity. While designs have been proposed in which airplanes include a series of small engines or motors along the surfaces and on vertical lift platforms by the assembly of a matrix of small engines or motors. However, the complexity and weight of installing large numbers of conventional turbine or internal combustion engines to achieve distributed propulsion is impractical for all but very large aircraft. For example, mechanically interconnecting multiple propellers using gearboxes and shafts to achieve distributed propulsion can reduce weight, but it sacrifices the ability to independently control propellers or fans to provide thrust vectoring for control and aerodynamic efficiency.

While many applications of electric motors to achieve practical distributed propulsion has attracted major interest by NASA, DARPA, and the aerospace industry, the power density necessary to attain and maintain flight using electric motors and batteries has simply not been feasible. While higher energy density batteries are in development, pure electric propulsion in combination with distributed propulsion, while attractive, has not been attained for anything except small drones and toys.

For example, current Li-ion battery technology is capable of achieving an energy density that would require an impractically heavy Li-ion battery. Thus, using current battery technology, electric distributed propulsion development requires the application of electric generators driven by turbo shaft engines. Replacing battery technology with generators driven by turbo shaft engines reduces system weight only marginally.

With the adoption of generators driven by turbo shaft engines in place of battery technology, the remaining major obstacle to achieving practical electric distributed propulsion is electric motor and associated controller technology. However, current electric motor technology and performance falls short of meeting the requirements for supporting practical application of distributed electric propulsion. As electric motor power and torque output is increased beyond the requirements of small drones to levels suitable for larger aircraft, the issues of power density (Watts of shaft power generated per kilogram of weight), cooling and lubrication lead to impractical increases in weight. Further, even when analyzing the performance of the most advanced electric motors the additional weight for cooling systems, lubrication systems, or required electric power controllers that regulate motor speed and torque are impractical or lead to no significant improvements in overall aircraft performance.

The present invention can use variable displacement hydraulic motors, with the advantage that speed and torque are controlled by changing the displacement of the motor. This is equivalent to having a variable speed transmission in a gearbox or being able to instantly change the size of an electric motor to suit required power demands. Changing the motor displacement requires very little power and can be achieved using servo valve adding very little weight. This added weight to control the hydraulic motor is independent of the rated power on the motor. When the added weight for the hydraulic motor controllers is added to the motor weight a significant improvement was obtained. Further, no additional weight for hydraulic motor lubrication or motor and controller cooling is required for hydraulic motors, as these are already part of the motor weight.

Further, when one compares the weight and volume of hydraulic tubing versus electrical cable required for transmission of power at the magnitudes required for larger aircraft, a benefit is also obtained, or, the values are basically equivalent. Thus, the hydraulic distributed propulsion system of the present invention is lighter than the most efficient, equivalent electric system.

Thus, the present invention takes advantage of the best cost-to-benefit ratio for use of hydraulic and electric motor propulsion. For example, the present invention uses the best of the possible high power systems performance aspects, including but not limited to, weight motor and controller, envelope for motor and controller installation, supplemental motor cooling required, supplemental motor lubrication required, high motor torque and low rotational inertia, motor reliability (not including controller), weight for transmission of power, and total system efficiency using engine.

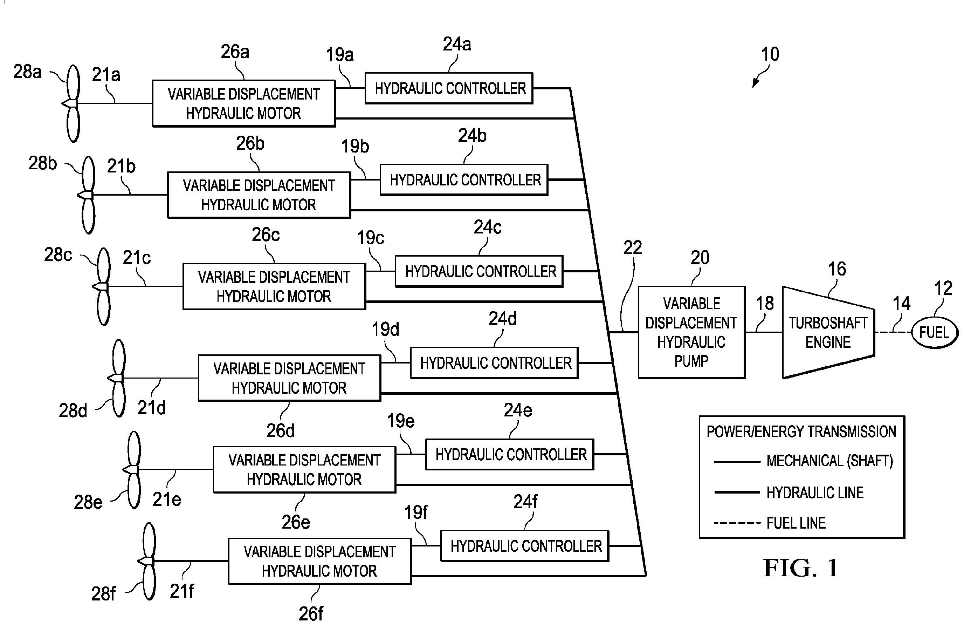

The invention addresses the limitations of electric motor, generator and battery technology as applied to the field of distributed propulsion for aircraft. By using variable displacement hydraulic pump and motor technology, distributed propulsion for larger aircraft is practical. In variable displacement hydraulic motors, speed and torque is controlled by changing the displacement of the motor. This is equivalent to having a variable speed transmission in a gearbox or being able to instantly change the size of an electric motor to suit required power demands. Compared with controlling electric motor speed using Pulse Width Modulation, changing hydraulic motor displacement requires very little power and negligible weight. Shown in FIGS. 1 to 4 are schematics describing the various preferred implementations of hydraulic distributed propulsion.

FIG. 1 shows a schematic of a hybrid turboshaft engine hydraulic distributed propulsion system 10 of the present invention. In the hybrid turboshaft engine hydraulic distributed propulsion system 10 a source of fuel 12 is connected to fuel line 14 that feeds a turboshaft engine 16 that generates a mechanical force that is transmitted by a mechanical shaft 18 that is connected to a variable displacement hydraulic pump 20. The variable displacement hydraulic pump 20 is connected to, and provides hydraulic power to, hydraulic lines 22. The hydraulic fluid in hydraulic lines 22 are connected to hydraulic controllers 24a-24f, which are connected mechanically by mechanical shafts 19a-19f to the variable displacement hydraulic motors 26a-26f, respectively, each of which is depicted being connected by a mechanical shafts 21a-21f each to propeller 28a-28f, respectively. Changing the displacement of the variable displacement hydraulic motors 26a-26f can control the speed and torque of the variable displacement hydraulic motors 26a-26f. The variable displacement hydraulic motors 26a-26f can be self-cooling. This schematic shows the Hybrid Turboshaft Engine Hydraulic distributed propulsion system 10 as having six (6) hydraulic controllers 24a-24f, and six (6) variable displacement hydraulic motors 26a-26f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the fuel is converted into mechanical power/energy via the turboshaft engine 16, which provides the hydraulic power that drives the variable displacement hydraulic motors 26a-26f and therefore the propellers 28a-28f.

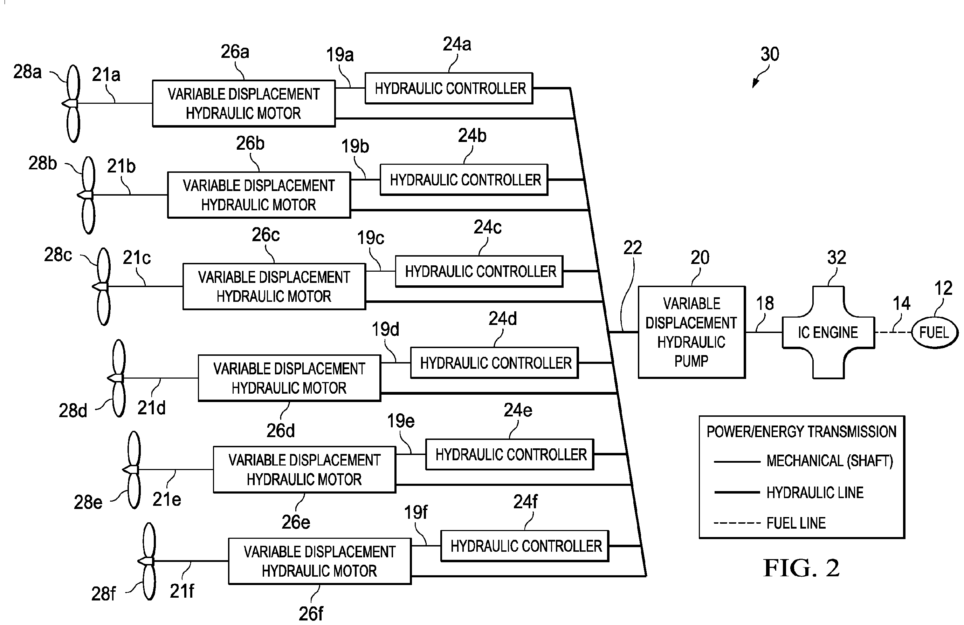

FIG. 2 shows a schematic of a hybrid internal combustion engine - engine hydraulic distributed propulsion system 30 of the present invention. In this embodiment, the hybrid internal combustion engine - engine hydraulic distributed propulsion system 30 uses a source of fuel 12 that is connected to fuel line 14 that feeds an internal combustion engine 32 that generates a mechanical force that is transmitted by a mechanical shaft 18 that is connected to a variable displacement hydraulic pump 20. The variable displacement hydraulic pump 20 is connected to, and provides hydraulic power to, hydraulic lines 22. The hydraulic fluid in hydraulic lines 22 is connected to hydraulic controllers 24a-24f, which are connected via shafts 19a-19f to variable displacement hydraulic motors 26a-26f, respectively, each of which is depicted being connected by a mechanical shafts 21a-21f each to propeller 28a-28f, respectively. Changing the displacement of the variable displacement hydraulic motors 26a-26f can control the speed and torque of the variable displacement hydraulic motors 26a-26f. The variable displacement hydraulic motors 26a-26f can be self-cooling. This schematic shows the Hybrid Internal Combustion Engine - Engine Hydraulic distributed propulsion system 30 as having six (6) hydraulic controllers 24a-24f, and six (6) variable displacement hydraulic motors 26a-26f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the fuel is converted into mechanical power/energy via the internal combustion engine 32, which provides the hydraulic power that drives the variable displacement hydraulic motors 26a-26f and therefore the propellers 28a-28f.

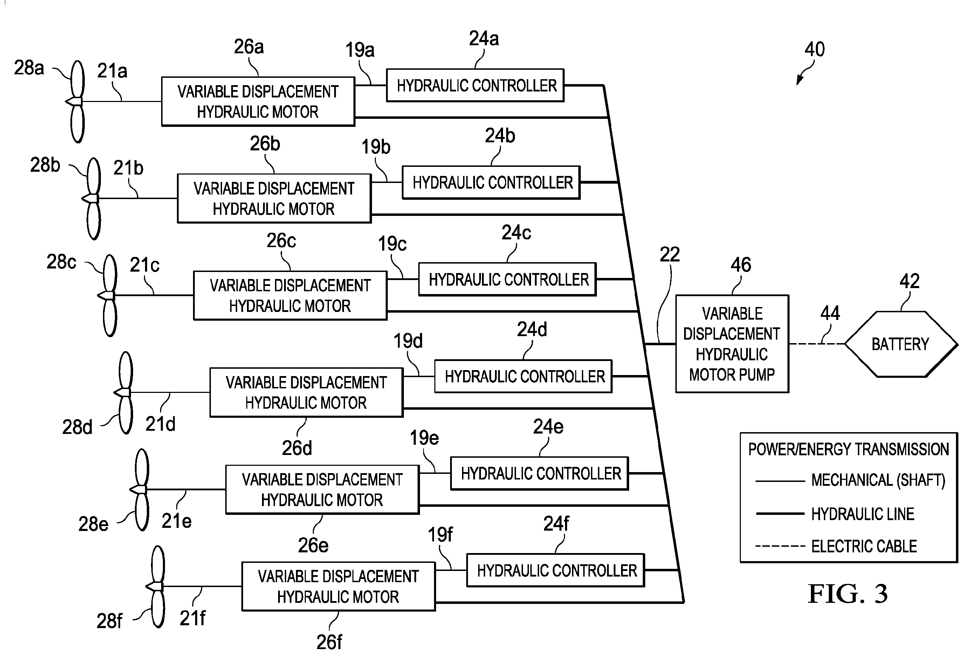

FIG. 3 shows a schematic of a hybrid electric hydraulic distributed propulsion system 40 of the present invention. In this embodiment, the hybrid electric hydraulic distributed propulsion system 40 uses a battery 42 that is connected to electrical cable 44 that directly powers a variable displacement hydraulic motor pump 46. The variable displacement hydraulic motor pump 46 is connected to, and provides hydraulic power to, hydraulic lines 22. The hydraulic fluid in hydraulic lines 22 are connected to hydraulic controllers 24a-24f, which are connected via shafts 19a-19f to variable displacement hydraulic motors 26a-26f, respectively, each of which is depicted being connected by mechanical shafts 21a-21f each to propeller 28a-28f, respectively. Changing the displacement of the variable displacement hydraulic motors 26a-26f can control the speed and torque of the variable displacement hydraulic motors 26a-26f. The variable displacement hydraulic motors 26a-26f can be self-cooling. This schematic shows the Hybrid Internal Combustion Engine - Engine Hydraulic distributed propulsion system 30 as having six (6) hydraulic controllers 24a-24f, and six (6) variable displacement hydraulic motors 26a-26f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the electrical power is converted into mechanical power/energy via the variable displacement hydraulic motor pump 46, which provides the hydraulic power that drives the variable displacement hydraulic motors 26a-26f and therefore the propellers 28a-28f.

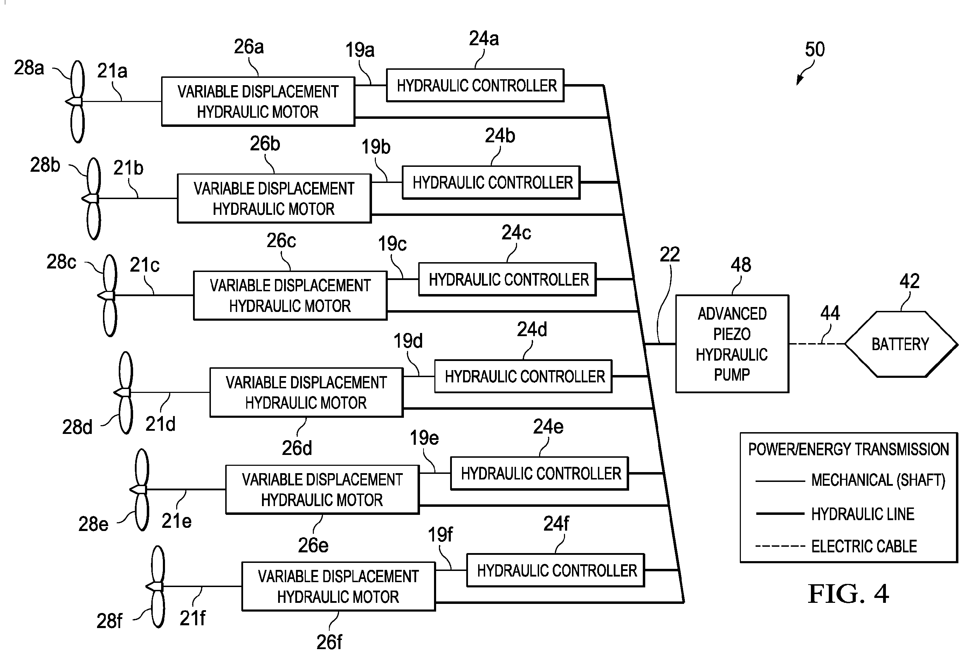

FIG. 4 shows a schematic of a hybrid electric hydraulic with a piezo-electric pump distributed propulsion system 50 of the present invention. In this embodiment, the hybrid electric hydraulic with a piezo-electric pump distributed propulsion system 50 uses a battery 42 that is connected to electrical cable 44 that directly powers a piezo-hydraulic pump 48. The piezo-hydraulic pump 48 is connected to, and provides hydraulic power to, hydraulic lines 22. The hydraulic fluid in hydraulic lines 22 are connected to hydraulic controllers 24a-24f, which are connected via shafts 19a-19f to variable displacement hydraulic motors 26a-26f, respectively, each of which is depicted being connected by a mechanical shafts 21a-21f each to propeller 28a-28f, respectively. This schematic shows the Hybrid Internal Combustion Engine - Engine Hydraulic distributed propulsion system 50 as having six (6) hydraulic controllers 24a-24f, and six (6) variable displacement hydraulic motors 26a-26f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the electrical power is converted into mechanical power/energy via the piezo-hydraulic pump 48, which provides the hydraulic power that drives the variable displacement hydraulic motors 26a-26f and therefore the propellers 28a-28f.

Some of the benefits of the distributed hydraulic system of the present invention, in conjunction with electric propulsion, can be attained by the present invention, for craft of all sizes. For example, for use with Vertical Take-Off and Landing (VTOL) aircraft the advantages of the present invention include: (1) a reduction in aircraft propulsion installation weight through greater structural integration; (2) the elimination of (rotor cyclic) control through differential and vectoring thrust for pitch, roll, and yaw moments; (3) high production rates and easy replacement of motors or propulsors that are small and light; (4) in the case of turbine/IC engine electric power generation, reduced fuel consumption and emissions through independent control of engine and rotor speeds; and (5) using electric batteries provided for more efficient energy usage, reduced emissions, and lower noise.

Further advantages of the present invention include addressing certain road blocks to distributed electric propulsion for larger VTOL aircraft. The present invention provides one or more of the following benefits: (1) the elimination of electric motor and required controller power densities are low at required power levels (excessive weight); (2) eliminate electric motor torque capacity that is inadequate for speed changes required for thrust vectoring of larger rotors; (3) with increased power, electric motors require large diameters with ducted air or liquid cooling to prevent over heating (increased weight/envelope/complexity); (4) with increased power electric motor bearings require active lubrication (increased weight/complexity); and (5) current battery technology energy density insufficient for practical applications due to excessive weight.

As will be described in more detail below, various embodiments of the present invention integrate a circular wing or ring wing configuration with a distributed a propulsion system to create a vertical takeoff and landing (VTOL) aircraft configuration with long range and high speed. These performance capabilities are achieved without increased aircraft complexity and cost normally incurred with this level of capability in a VTOL aircraft. No reconfiguration of the aircraft is required to transition between vertical hover and horizontal airplane mode flight. The "tail sitter" or "pogo" configuration allows transition without any physical configurations. However, in some embodiments, structural, aerodynamic or power plant adjustments and/or reconfigurations may be desirable. In some embodiments, the rotor blades of the closed wing mounted propellers can be folded either forward or back to further reduce drag and provide increased speed and duration.

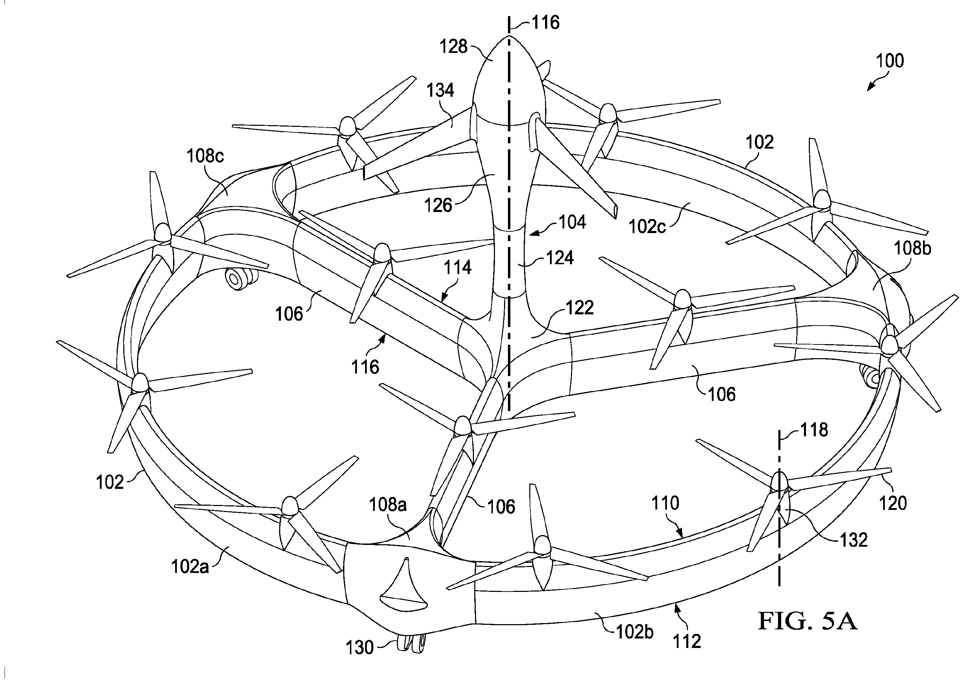

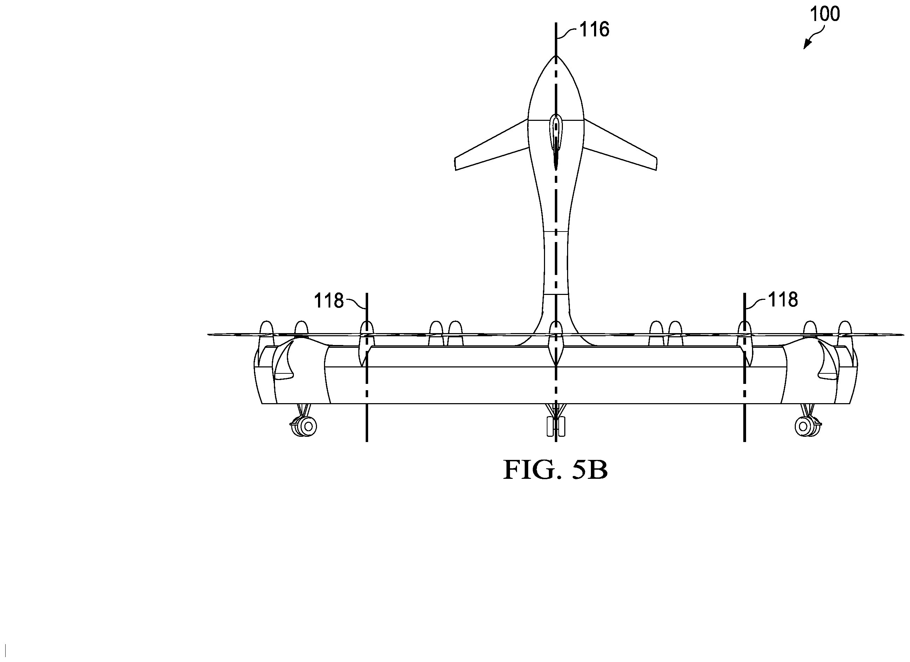

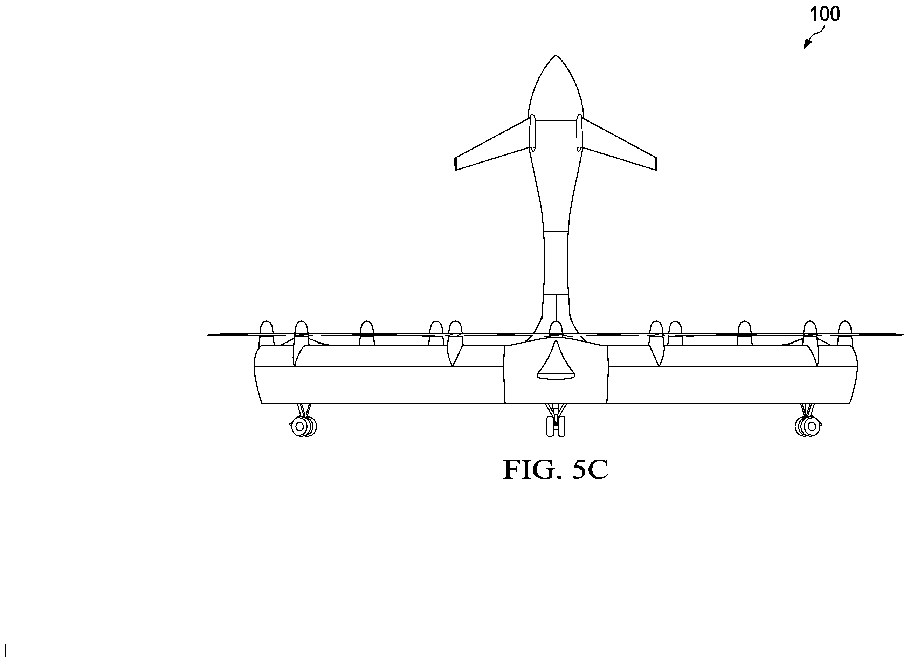

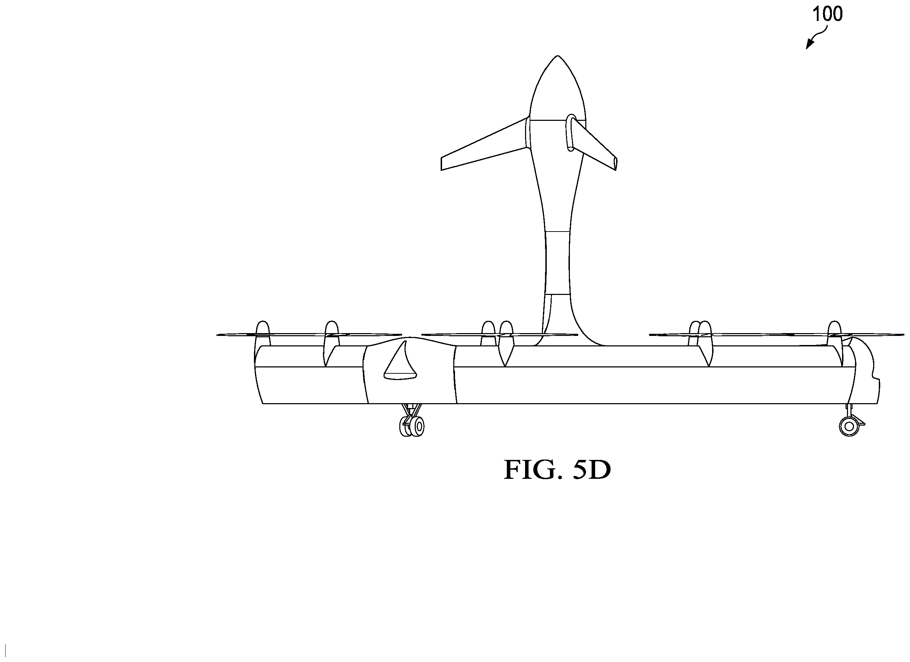

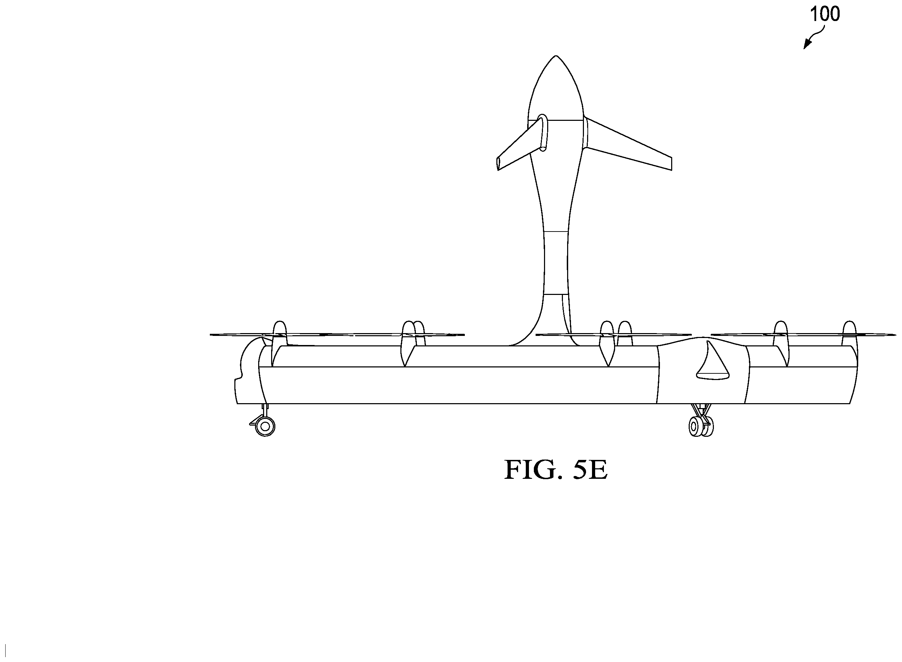

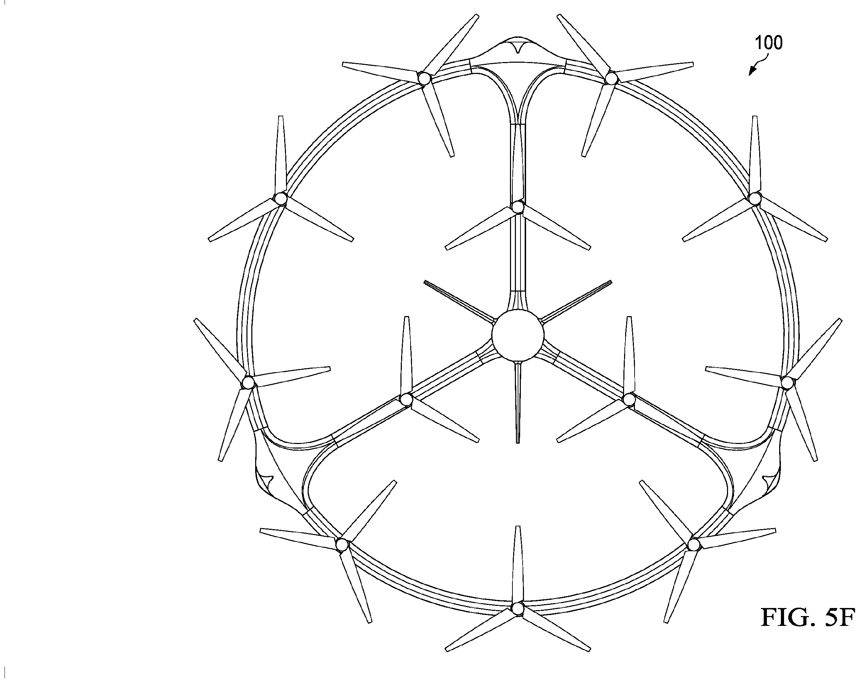

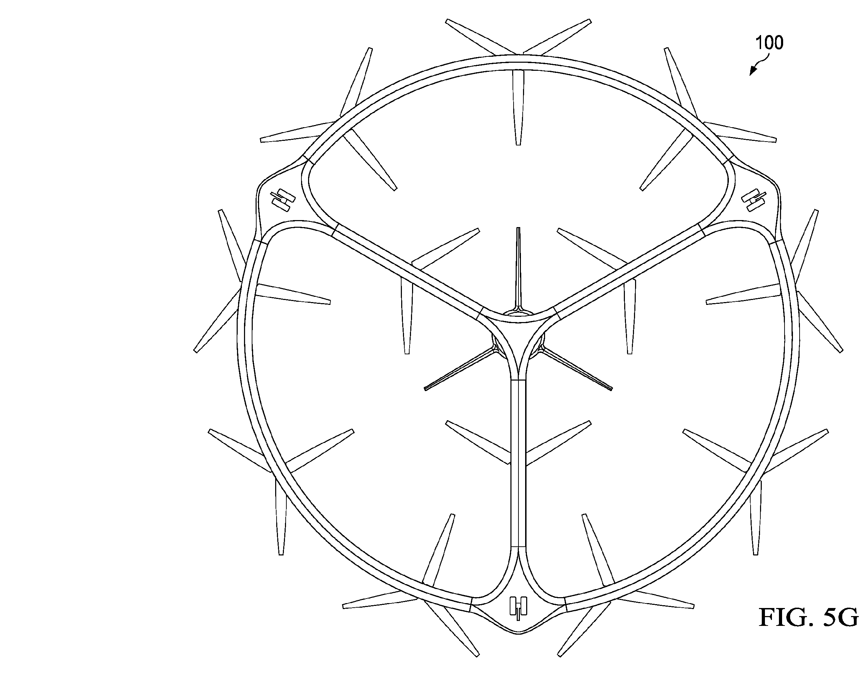

Now referring to FIGS. 5A-5G, various views of a closed wing aircraft 100 in accordance with one embodiment of the present invention are shown. More specifically, FIG. 5A is a perspective view, FIG. 5B is a front elevation view, FIG. 5C is a rear elevation view, FIG. 5D is right side elevation view, FIG. 5E is a left side elevation view, FIG. 5F is a top plan view, and FIG. 5G is a bottom plan view. This closed wing aircraft 100 features the following: 1) Tail sitter configuration provides for conversion to airplane mode without reconfiguration; 2) Circular wing optimizes propulsion, structural, aerodynamic, and center of gravity (CG) requirements; 3) Gearboxes and drive train are completely eliminated; 4) Rotor cyclic and collective controls are replaced by variable speed constant pitch propellers; and 5) Yaw in vertical flight and roll in hover mode are provided by trailing edge surfaces on the spokes connecting the closed wing to the fuselage.

The closed wing aircraft 100 utilizes the ring wing configuration to provide a symmetric matrix distribution of hydraulic or electric motor driven propellers to maximize controllability and provide safety in the event of a hydraulic or electric motor failure. The ring wing also reduces the effects of cross winds during takeoff and landing by minimizing the affected wing area and eliminating induced yaw. In airplane mode flight the ring wing allows the aircraft maintain any roll position in order to position sensors as required. For noise reduction the propellers within the ring provide an acoustic barrier. Structurally, the combination of distributed propulsion and the ring wing minimizes bending moments allowing for lighter and stiffer structure compared with distributed propulsion on straight wings. Engines or fuel/batteries can be housed in the base of the fuselage or at the intersection of the spokes to the ring wing for strength and minimization of weight. Landing gear is positioned at these points for similar reasons.

More specifically, the aircraft 100 can be manned or unmanned and is capable of vertical takeoff and landing, stationary flight and forward flight. The aircraft 100 includes a closed wing 102, a fuselage 104 at least partially disposed within a perimeter of the closed wing 102, and one or more spokes 106 coupling the closed wing 102 to the fuselage 104. The closed wing 102 can be circular-shaped, oval-shaped, triangular-shaped, polygonal-shaped or any other shape suitable for the desired operational and aerodynamic requirements of the aircraft 100. In addition, the closed wing can be made up of a plurality of wing segments 102a, 102b, 102c and wing-spoke intersections or junctions 108a, 108b, 108c connected together. The cross-sectional profile of the closed wing 102 between the leading edge 110 and trailing edge 112 can be a symmetrical airfoil or any desirable aerodynamic shape. The number of spokes 106 can be determined, in part, by the shape and size of the closed wing 102, and the shape, size and payload of the fuselage 104. The cross-sectional profile of the spokes 106 between the leading edge 114 and the trailing edge 116 can be a symmetrical airfoil or any desirable aerodynamic shape. The closed wing 102, the fuselage 104 and the one or more spokes 106 are preferably symmetrically shaped to provide transition between vertical takeoff and landing, stationary flight and forward flight in any direction. However, non-symmetrical shapes can be used. As a result, the shape of the closed wing 102 and number of spokes 106 shown in the figures is only one example and is not intended to limit the scope of the invention. The closed wing 102 may also include one or more doors or removable sections that provide access to the fuselage 104 when the aircraft 100 is in a landed position.

The fuselage 104 may include one or more sections or modules that have a longitudinal axis 116 substantially parallel to a rotational axis 118 of the propellers 120. The shape and length of the fuselage 104 will vary depending on the desired mission and flight characteristics. As a result, the shape and length of the fuselage 104 shown in the figures is only one example and is not intended to limit the scope of the invention. For example, the fuselage 104 may include a rear section or module 122 substantially disposed at a center of the closed wing 102 that provides a fuselage-spoke intersection or junction, a middle section or module 124 connected to the rear section or module 122, a front section or module 126 connected to the middle module 124, and a nose section or module 128 connected to the front section or module 126. Sections or modules 122, 124, 126, 128 can be removably connected to one another, which makes the aircraft 100 configurable for any desired mission or function. In other words, the closed wing 102 and one or more spokes 106 provide a stable flight platform any desired payload. Moreover, the middle 124, front 126 and nose 128 sections or modules can detach, pivot, or retract at least partially into one or more of the other sections or modules for storage or transport of the aircraft 100. The rear 122, middle 124, front 126 and nose 128 sections or modules can be individually configured to be a cockpit module, a cabin module, an escape module, a payload module, a sensor module, a surveillance module, a power source module, a fuel module, or any combination thereof. Note that the nose section or module 128 may contain one or more parachutes.

The aircraft 100 also includes three or more landing gear, pads or skids 130 operably attached to the closed wing 102. Typically, the landing gear, pads or skids 130 will be disposed proximate to the wing-spoke intersections or junctions 108a, 108b, 108c where there is more structural support. The landing gear, pads or skids 130 can be retractable.

One or more engines or motors 132 are disposed within or attached to the closed wing 102, fuselage 104 or spokes 106 in a distributed configuration. Three or more propellers 120 are proximate to the leading edge 110 of the closed wing 102 or the leading edge 114 of the one or more spokes 106, distributed along the closed wing 102 or the one or more spokes 106, and operably connected to the one or more engines or motors 132. In the embodiment shown, nine propellers 120 are disposed proximate to the closed wing 102, and one propeller 120 is disposed proximate to each spoke 106. The propellers 120 can be variable speed constant pitch propellers or other type of propeller. The distribution and number of propellers 120 are designed to provide stability during the failure of one or more propellers 120, or engines or motors 132.

In one embodiment, a source of hydraulic or electric power is disposed within or attached to the closed wing 102, fuselage 104 or spokes 106 and coupled to each of the of hydraulic or electric motors 132 disposed within or attached to the closed wing 102, fuselage 104 or spokes 106. The source of hydraulic or electric power provides sufficient energy density for the aircraft to attain and maintain operations of the aircraft 100. The source of hydraulic or electric power can be one or more batteries, a piston engine, or a turboshaft engine. A controller is coupled to each of the hydraulic or electric motors 132, and one or more processors are communicably coupled to each controller that control an operation and speed of the plurality of hydraulic or electric motors 132. Note that a single source of hydraulic or electric power can drive multiple hydraulic or electric motors 132. For example, a source of hydraulic or electric power can be located in the wing-spoke intersections or junctions 108a, 108b, 108c or the rear fuselage 122 where there is more structural support. Hydraulic or electric power distribution systems can be used to transmit the power to the hydraulic or electric motors 132, which in turn drive the propellers 120. The hydraulic or electric motors 132 are selected based on at least one of aerodynamics, propulsive efficiency, structural efficiency, aeroelasticity, or weight of the aircraft. Moreover, the propellers 120, or the engines or motors 132 can be mounted to pivot to provide directional thrust. Similarly, additional thrusters can be disposed on the closed wing 102, fuselage 104 or spokes 106. Various examples of distributed power systems are shown in FIGS. 1-4.

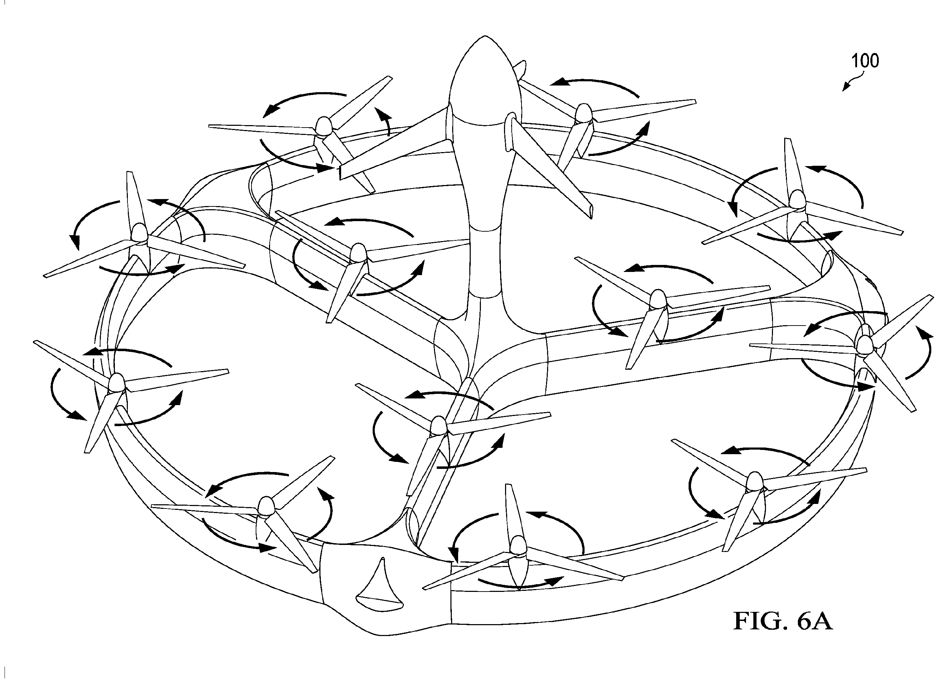

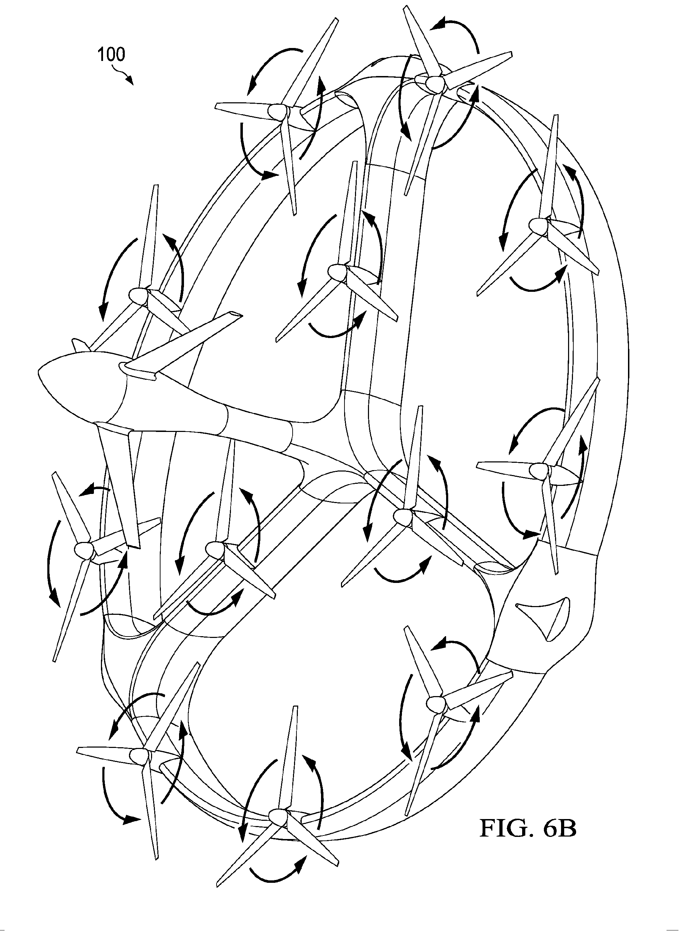

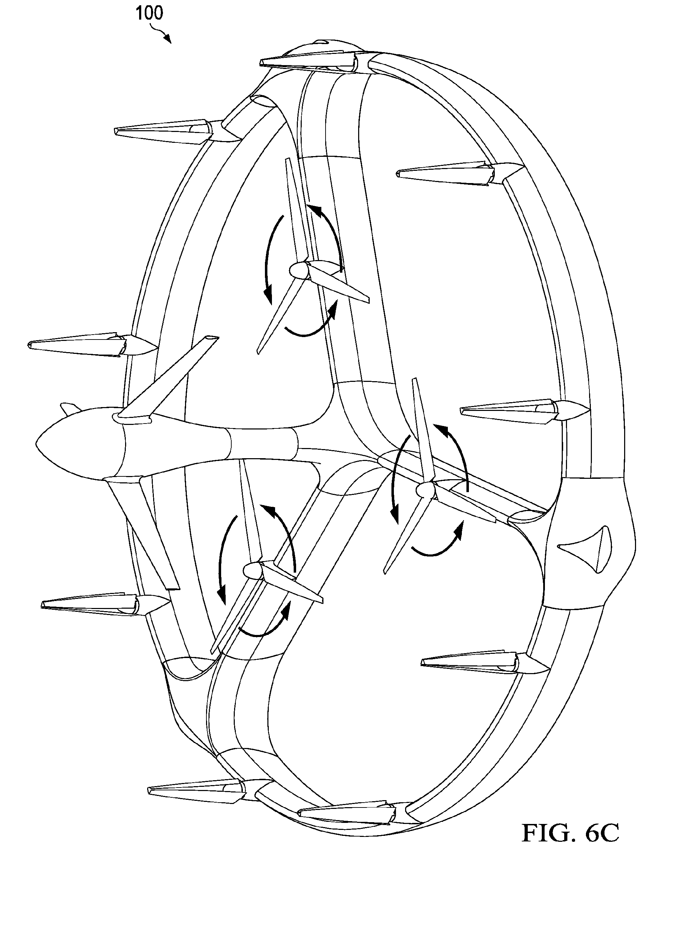

Referring now to FIGS. 6A-6C, the aircraft 100 is shown in stationary flight (hover mode including vertical take off and landing) (FIG. 6A), transition from stationary flight to forward flight and vice versa (FIG. 6B), and forward flight (FIG. 6C). The closed wing 102 provides lift whenever the aircraft 100 is in forward flight. The three or more propellers 120 provide lift whenever the aircraft 100 is in vertical takeoff and landing and stationary flight, and provide thrust whenever the aircraft 100 is in forward flight. During forward flight, the propellers 120 can be selectively feathered or operated in a low power mode because the closed wing 102 and spokes 106 provide lift. One or more flight control surfaces are disposed on or extending from the closed wing 102, spokes 106 or the fuselage 104 to provide improved control and flight characteristics. The one or more control surfaces may include one or more air foils, winglets, elevators or ailerons. For example and as shown in FIGS. 5A-5G, winglets 134 mounted on the forward section or module 126 of the fuselage 104. Note that the one or more airfoils or winglets can be retractable, removable, stowable or variable swept. Note also that the rotation of the propellers 120 can be counter-clockwise (as shown), or clockwise, or a combination (i.e., a first group of propellers rotates counter-clockwise and a second group of propellers rotates clockwise).

As shown, the closed wing 102, fuselage 104 and spokes 106 are not substantially reconfigured for transition between vertical takeoff and landing, stationary flight and forward flight. However, in some embodiments it may be desirable to have the one or more spokes 106 operable to change a position of the closed wing 102 with respect to the fuselage 104 or vice versa. In other words, the spokes 106 would selectively pivot the closed wing 102 to act like a giant flap in horizontal mode and/or assist in transition to/from vertical mode.

The aircraft 100 provides a stable platform for one or more sensors or surveillance packages disposed on, disposed within or attached to the closed wing 102, spokes 106 or fuselage 104. In fact, the configuration of the aircraft 100 allows the placement of the one or more sensors or surveillance packages to provide a 360 degree view. Moreover, the extension of the fuselage 104 from the engines or motors 132 provides a wide unobstructed view for the one or more sensors or surveillance packages.

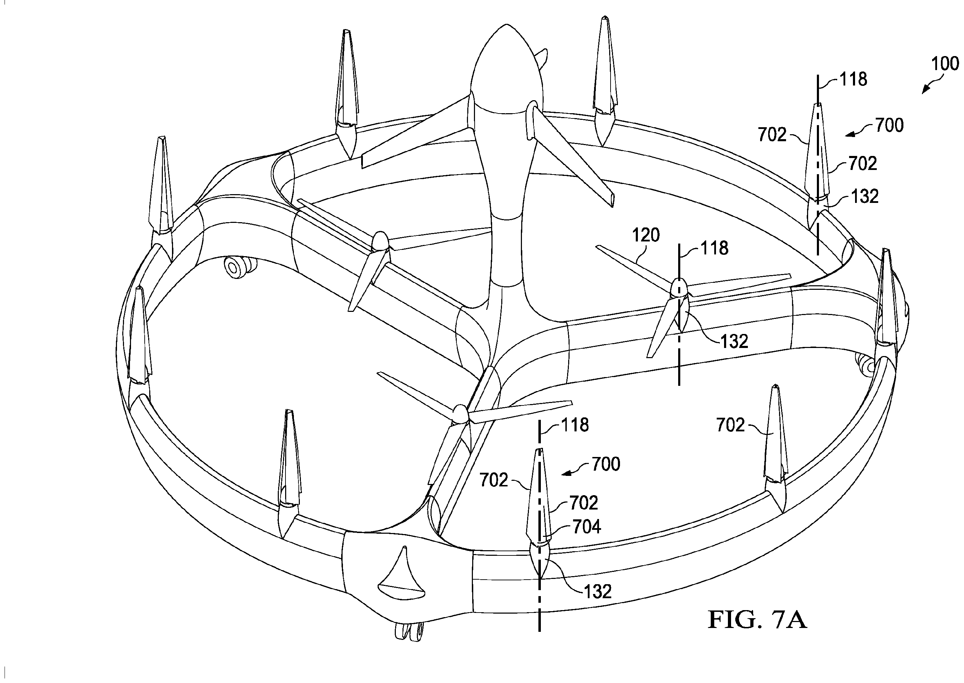

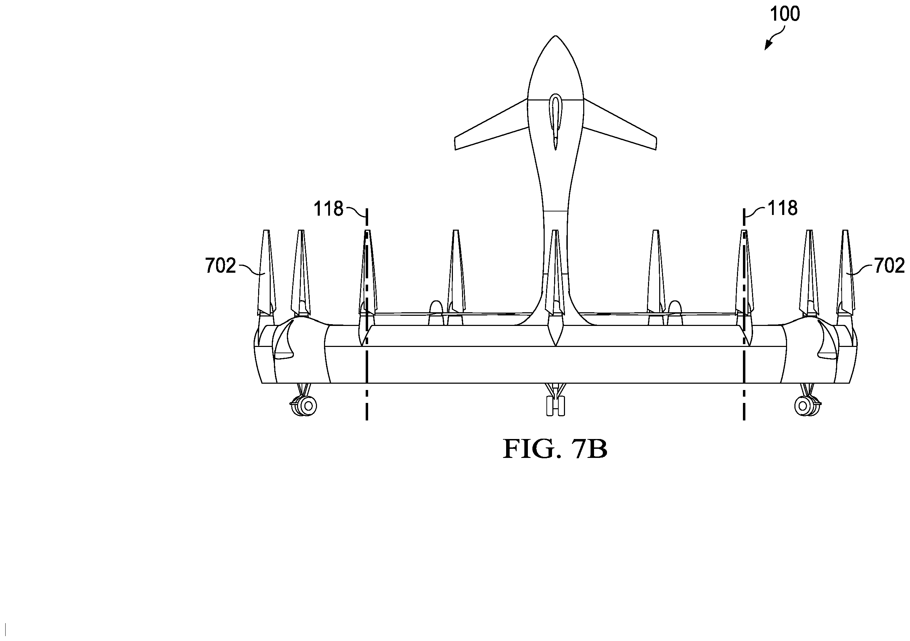

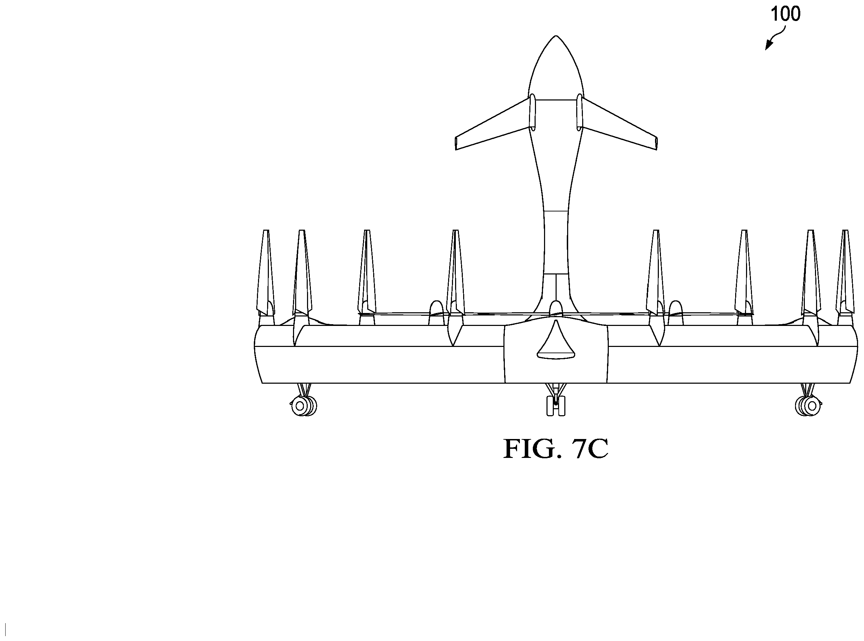

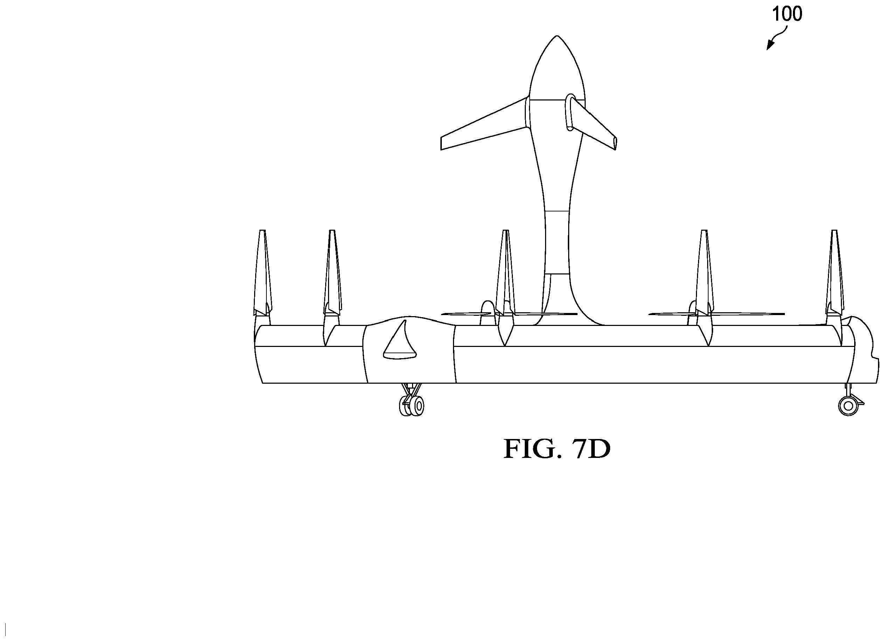

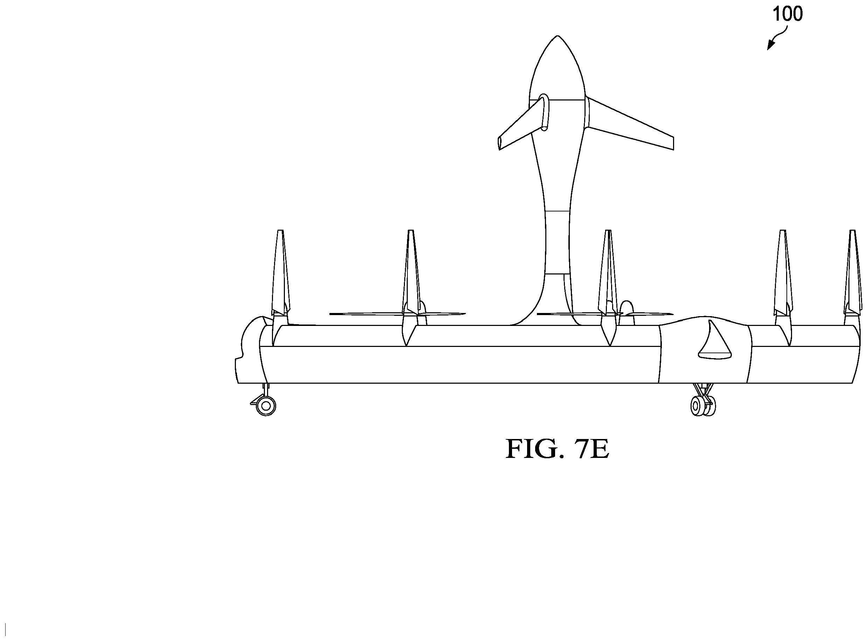

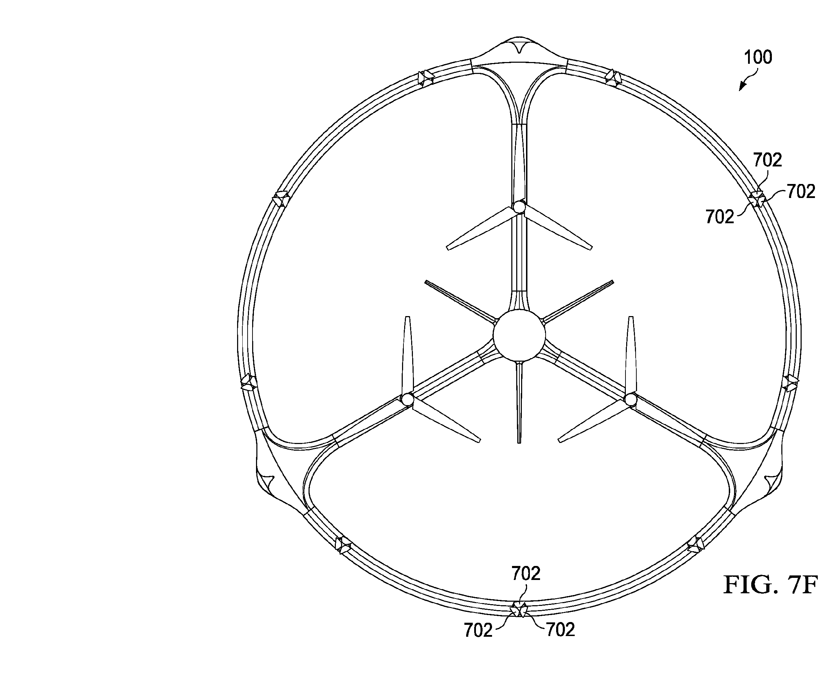

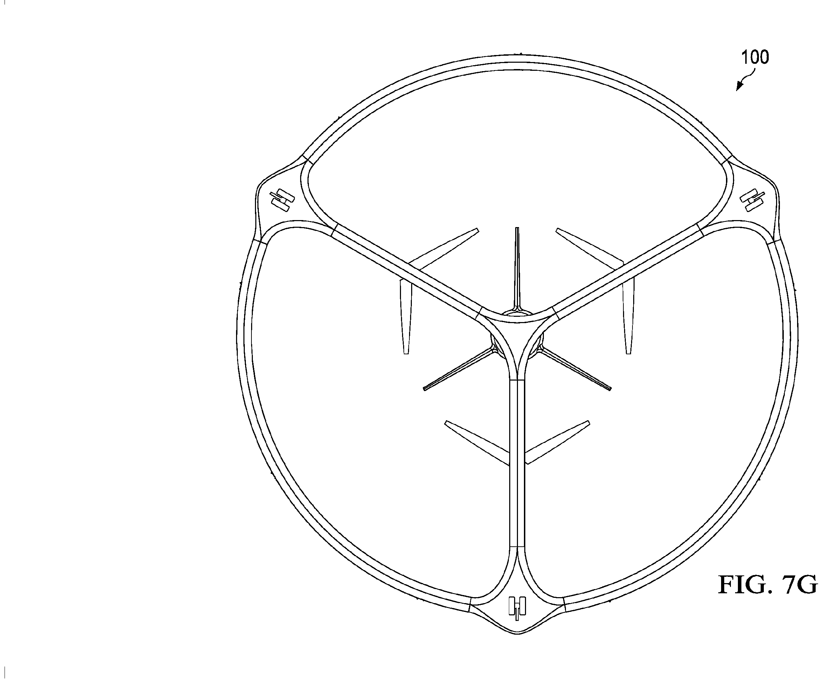

As shown in FIG. 6C and FIGS. 7A-7G, the propellers 120 can be selectively folded in a forward direction. The propellers 120 could also be folded in a backward direction. In the embodiment having the forward folding propellers 700, each propeller 700 includes two or more rotor blades 702, each rotor blade 702 in mechanical communication with a hub 704 and pivotable about an axis of rotation 118. A fold linkage mechanically couples a rotating portion of a bearing plate to the rotor blade 702. An actuator is coupled to a nonrotating portion of the bearing plate and is operable to reposition the bearing plate from a first position to a second position such that the folding links pivot the rotor blades 702 from a deployed position to a folded position. The folded position can be a forward direction, which extends past the hub 704 with the first position of the bearing plate is closer to the hub 704 than the second position of the bearing plate. A tip of all the rotors 702 can be preloaded together in the forward folded position such that a vibration of the rotors 702 is minimized.

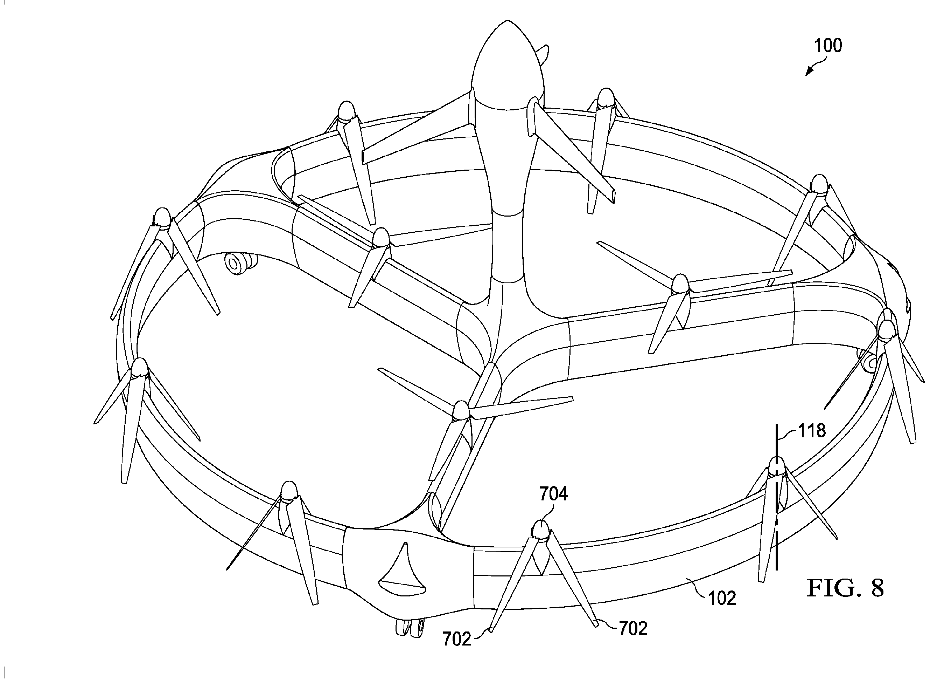

Alternatively and as shown in FIG. 8, the folded position can be a backward direction, which extends away from the hub 704, and the first position of the bearing plate is closer to the hub 704 than the second position of the bearing plate. The angle or distance that the rotors 702 can fold will depend on the relative size and shape of the closed wing with respect to the pivot point and size of the rotors. For example, FIG. 8 shows the rotors 702 folded in a backward position, but not against the surface of the closed wing 102 or substantially parallel to the rotational axis 118 of the rotors 702. Some embodiments of the present invention will have the rotors 702 resting against or close to the surface of the closed wing 102 and/or substantially parallel to the rotational axis 118 of the rotors. An example of backward folding rotor blades is disclosed in U.S. Patent No. 9,156,545.

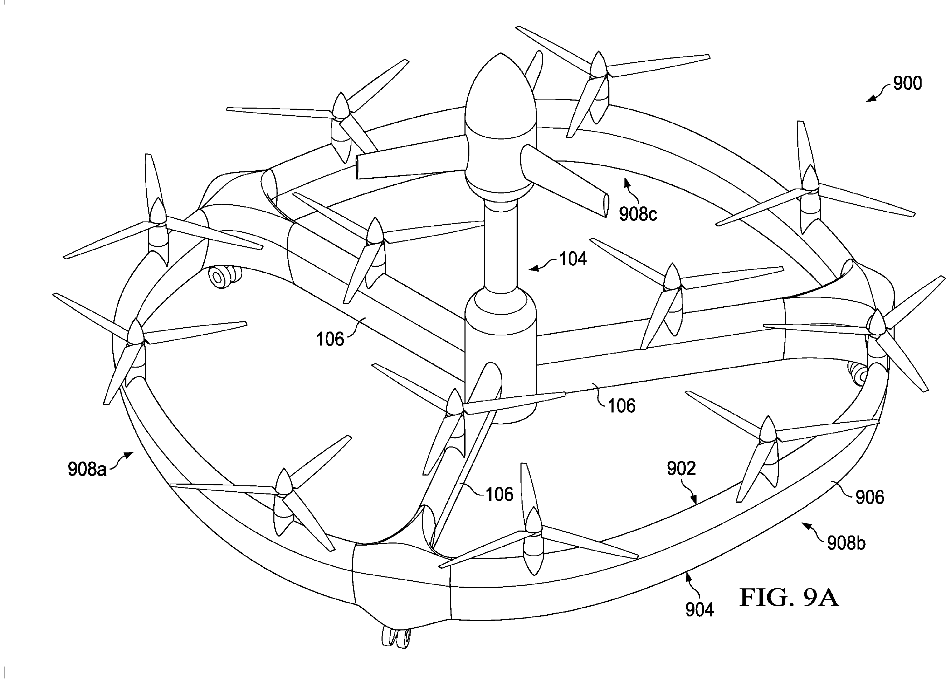

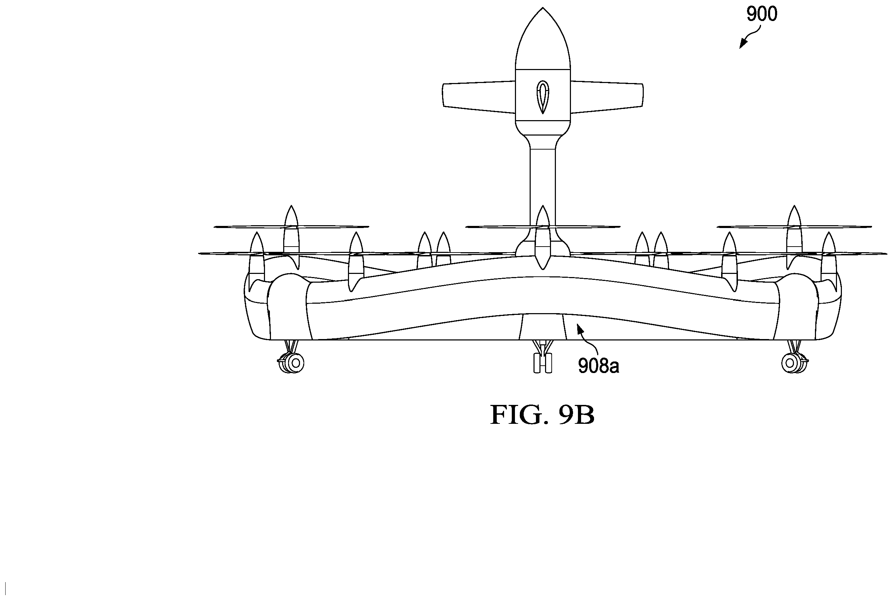

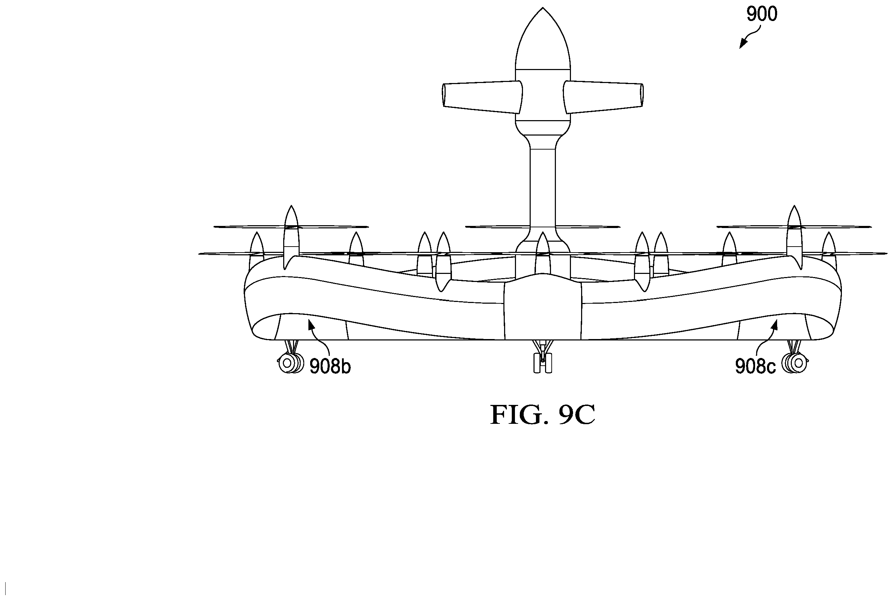

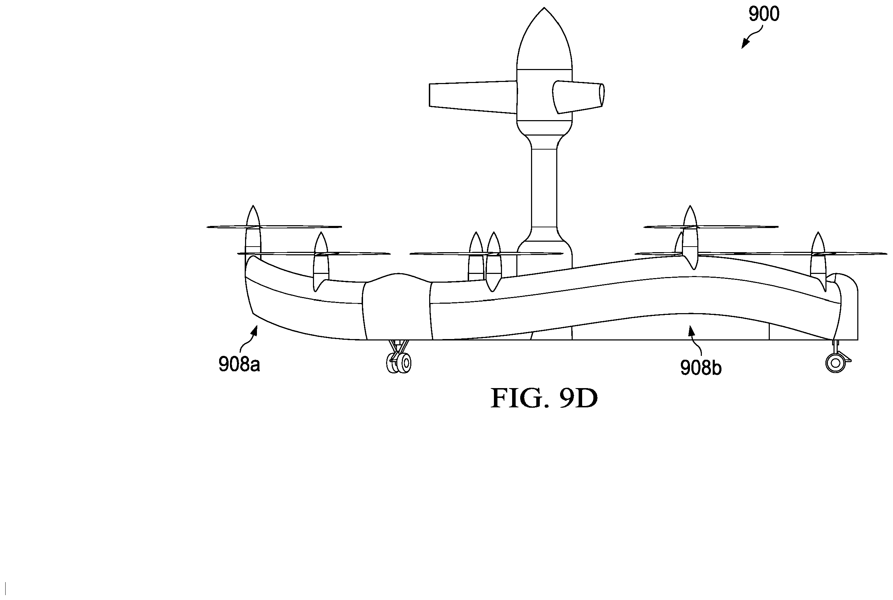

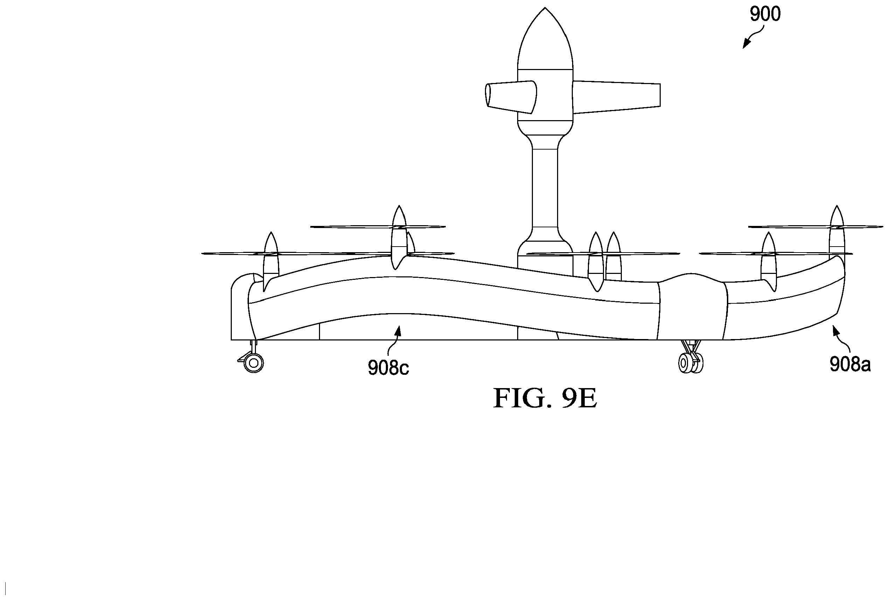

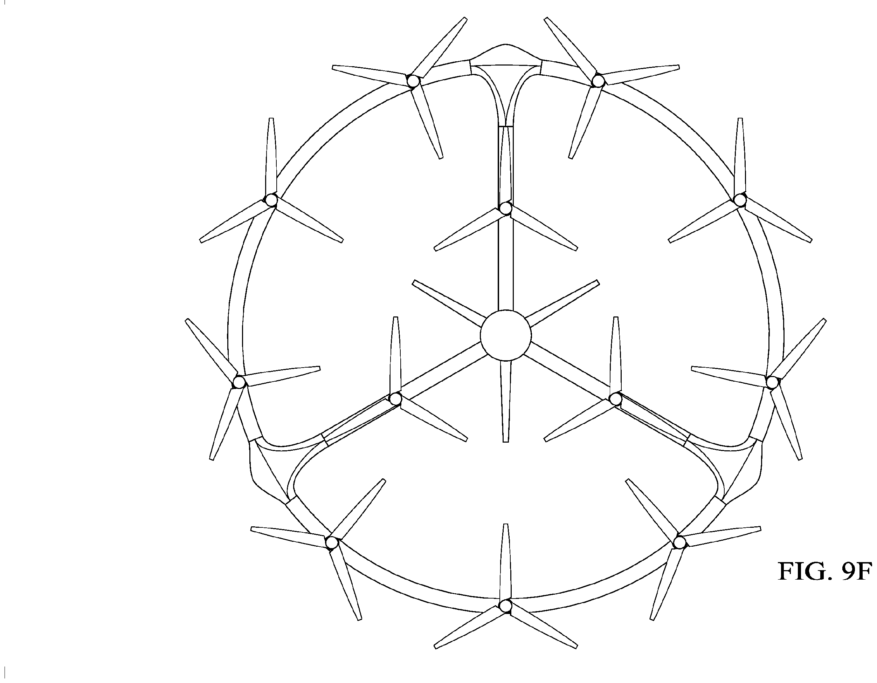

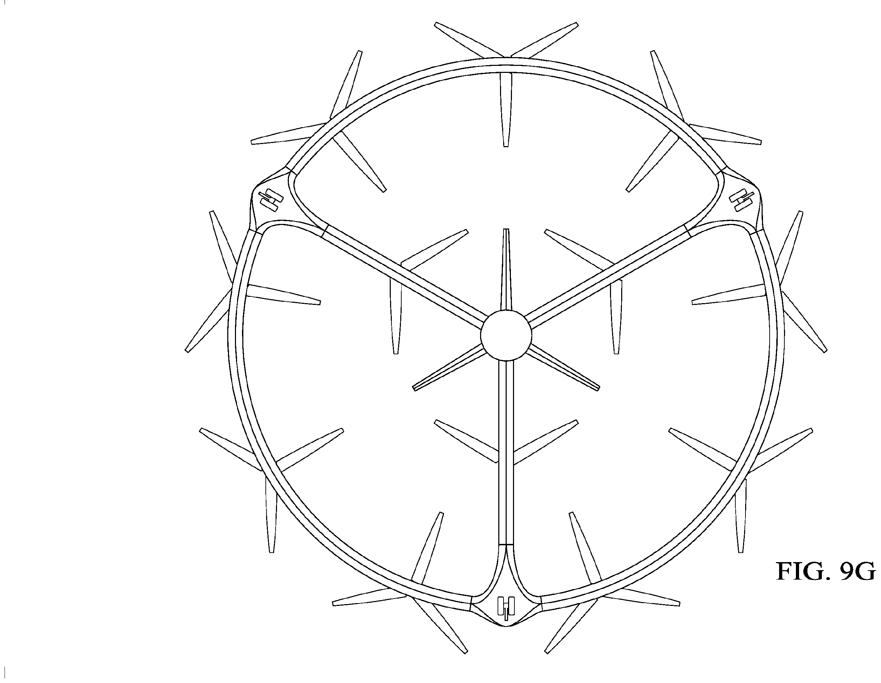

Now referring to FIGS. 9A-9G, various views of a closed wing aircraft 900 having a sinusoidal-shaped circular wing in accordance with one embodiment of the present invention are shown. More specifically, FIG. 9A is a perspective view, FIG. 9B is a front elevation view, FIG. 9C is a rear elevation view, FIG. 9D is right side elevation view, FIG. 9E is a left side elevation view, FIG. 9F is a top plan view, and FIG. 9G is a bottom plan view. As shown, the leading edge 902 and trailing edge 904 of the closed wing 906 are sinusoidal-shaped. Instead of the circular wing being a constant height around the center fuselage 104 as previously shown, the wing rises and falls to create three sinusoidal humps 908a, 908b, 908c. The humps 908a, 908b, 908c are at their highest between the three spokes 106 and lowest where the wing 906 attaches to the spokes 106. The advantages of this configuration are as follows: 1) Additional wing ground clearance to the circular wing when landing. With the flat circular wing landing must be close to perpendicular to avoid damaging the wing or the landing gear must be made much longer. 2) Improved access to center fuselage. With the flat circular wing access to the center fuselage is restricted by the height of the wing. 3) Improved stability by moving the wing center of pressure closer to the aircrafts center of gravity. The same benefits are achieved but to a lesser degree with four sinusoidal humps and four spokes and two sinusoidal humps with two spokes. With more than four sinusoidal humps the benefits are negligible. Alternatively, only one of the leading edge 902 or the trailing edge 904 of the closed wing 906 is sinusoidal-shaped. Moreover, other wing shapes can be used.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of' or "consisting of'. As used herein, the phrase "consisting essentially of' requires the specified integer(s) or steps as well as those that do not materially affect the character or function of the claimed invention. As used herein, the term "consisting" is used to indicate the presence of the recited integer (e.g., a feature, an element, a characteristic, a property, a method/process step or a limitation) or group of integers (e.g., feature(s), element(s), characteristic(s), propertie(s), method/process steps or limitation(s)) only.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skilled in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15% from the stated value.

All of the methods disclosed and claimed herein can be made and executed without undue experimentation in light of the present disclosure.

## Claims

1. An aircraft capable of vertical take-off and landing, stationary flight and forward flight, comprising:
a closed wing (102), a fuselage (104) at least partially disposed within a perimeter of the closed wing (102), and three or more spokes (106) coupling the closed wing (102) to the fuselage; and
a distributed propulsion system (10), comprising:
a plurality of variable displacement hydraulic motors (132, 26a-26f) disposed within or attached to the closed wing (102), fuselage (104) or spokes (106) in a distributed configuration;
a constant pitch propeller (120, 28a-28f) proximate to a leading edge of the closed wing (102) or the three or more spokes (106), and operably connected to each of the variable displacement hydraulic motors (132, 26a-26f) to provide lift whenever the aircraft (100) is in vertical take-off and landing and stationary flight and thrust whenever the aircraft (100) is in forward flight;
a source of hydraulic (20) power disposed within or attached to the closed wing (102), fuselage (104) or spokes (106) and coupled to each of the plurality of variable displacement hydraulic motors (132, 26a-26f), wherein the source of hydraulic power provides sufficient energy density for the aircraft to attain and maintain operations of the aircraft;
a plurality of controllers (24a-24f), each controller (24a-24f) coupled to the source of hydraulic power, and to one of the variable displacement hydraulic motors (26a-26f) via a mechanical shaft (19a-19f) to independently control a speed and a torque of the variable displacement hydraulic motors (26a-26f) by changing a displacement of the variable displacement hydraulic motors (26a-26f); and
one or more processors communicably coupled to each controller (24a-24f) that control an operation, the speed and the torque of the plurality of variable displacement hydraulic motors (26a-26f) via the controllers (24a-24f) such that a pitch, roll and yaw moment of the aircraft is controlled via differential and vectoring thrust without rotor cyclic and collective controls.

2. The aircraft of claim 1 comprising one or more control surfaces.

3. The aircraft of claim 1 or 2, wherein:
the source of hydraulic power comprises one or more batteries, a piston engine, or a turboshaft engine; and/or
the plurality of variable displacement hydraulic motors comprise 2, 3, 4, 5, 6, 7, 8, 9, 10, 11, 12, 13, 14, 15, 16, 17, 18, 19, 20, 21, 22, 23, 24, or 25 variable displacement hydraulic motors.

4. The aircraft of any preceding claim, wherein the propeller is at least one of a rear folding, or a forward folding propeller.

5. The aircraft of any preceding claim, wherein the variable displacement hydraulic motors are defined further as a variable displacement hydraulic engine.

6. The aircraft of any preceding claim, wherein the variable displacement hydraulic motors are self-cooling.

7. The aircraft of any preceding claim, wherein the source of hydraulic power comprises a turboshaft engine or an internal combustion engine, and a variable displacement hydraulic pump connected between the turboshaft engine or the internal combustion engine and the plurality of variable displacement hydraulic motors; and/or
wherein the source of hydraulic power comprises one or more batteries, and a variable displacement hydraulic motor pump or a piezo-hydraulic pump connected between the one or more batteries and the plurality of variable displacement hydraulic motors.

8. The aircraft of any preceding claim, wherein the aircraft is manned or unmanned.

9. The aircraft of any preceding claim, wherein:
the aircraft (100) is a helicopter.

10. A method for distributed propulsion of an aircraft comprising:
determining at least one of aerodynamics, propulsive efficiency, structural efficiency, and weight of the aircraft;
selecting a number, size and type of variable displacement hydraulic motors (26a-26f) necessary to provide distributed propulsion for powered operations of the aircraft;
selecting a power source having sufficient energy density to power the variable displacement hydraulic motors (26a-26f) connected to constant pitch propellers (120, 28a-28f) to operate the aircraft; and
providing an aircraft as defined in any of claims 1 to 9.

11. The method of claim 10, further comprising calculating aerodynamics, propulsive efficiency, structural efficiency, or aeroelasticity, and selecting the number, power output, and type of hydraulic motors used for distributed propulsion.

12. The method of claim 10 or claim 11 further comprising selecting the variable displacement hydraulic motors (26a-26f) based on at least one of aerodynamics, propulsive efficiency, structural efficiency, aeroelasticity, or weight of the aircraft.

## Patentansprüche

1. Luftfahrzeug, das zum Senkrechtstarten und -landen, stationären Flug und Vorwärtsflug fähig ist, das Folgendes umfasst:
einen Boxwing (102), einen Rumpf (104), der mindestens teilweise innerhalb eines Umkreises des Boxwing (102) angeordnet ist, und drei oder mehrere Speichen (106), die den Boxwing (102) mit dem Rumpf koppeln; und
ein verteiltes Antriebssystem (10), das Folgendes umfasst:
eine Vielzahl von Hydraulikmotoren mit variablem Hubraum (132, 26a bis 26f), die innerhalb des Boxwing (102), des Rumpfs (104) oder der Speichen (106) in einer verteilten Konfiguration angeordnet sind;
einen Propeller mit konstanter Steigung (120, 28a bis 28f) nahe einer Vorderkante des Boxwing (102) oder der drei oder mehr Speichen (106), und der betrieblich mit jedem der Hydraulikmotoren mit variablem Hubraum (132, 26a bis 26f) verbunden ist, um Hub immer dann bereitzustellen, wenn sich das Luftfahrzeug (100) in Senkrechtstarten und -landen und stationärem Flug befindet, und Schub, wenn das Luftfahrzeug (100) vorwärtsfliegt;
eine Hydraulikleistungsquelle (20), die innerhalb des Boxwing (102), des Rumpfs (104) oder der Speichen (106) angeordnet oder an diesen angebracht und mit jedem der Vielzahl von Hydraulikmotoren mit variablem Hubraum (132, 26a bis 26f) verbunden ist, wobei die Hydraulikleistungsquelle ausreichend Energiedichte bereitstellt, damit das Luftfahrzeug die Betriebsarten des Luftfahrzeugs erreicht und aufrechterhält;
eine Vielzahl von Steuervorrichtungen (24a bis 24f), wobei jede Steuervorrichtung (24a bis 24f) mit der Hydraulikleistungsquelle und mit einem der Hydraulikmotoren mit variablem Hubraum (26a bis 26f) über eine mechanische Welle (19a-19f) gekoppelt ist, um unabhängig eine Drehzahl und ein Drehmoment der Hydraulikmotoren mit variablem Hubraum (26a bis 26f) durch Ändern einer Verlagerung der Hydraulikmotoren mit variablem Hubraum (26a bis 26f) zu steuern; und
einen oder mehrere Prozessoren, die kommunikationsfähig mit jeder Steuervorrichtung (24a bis 24f) verbunden sind, die einen Betrieb, die Drehzahl und das Drehmoment der Vielzahl von Hydraulikmotoren mit variablem Hubraum (26a bis 26f) über die Steuervorrichtungen (24a bis 24f) derart steuern, dass eine Nick-, Roll- und Gierbewegung des Luftfahrzeugs über Differenz- und Vektorschubsteuerung ohne zyklische und kollektive Steuerungen des Rotors gesteuert wird.

2. Luftfahrzeug nach Anspruch 1, das eine oder mehrere Steueroberflächen umfasst.

3. Luftfahrzeug nach Anspruch 1 oder 2, wobei:
die Hydraulikleistungsquelle eine oder mehrere Batterien, einen Kolbenmotor oder ein Wellenleistungstriebwerk umfasst; und/oder
die Vielzahl von Hydraulikmotoren mit variablem Hubraum 2, 3, 4, 5, 6, 7, 8, 9, 10, 11, 12, 13, 14, 15, 16, 17, 18, 19, 20, 21, 22, 23, 24 oder 25 Hydraulikmotoren mit variablem Hubraum umfasst.

4. Luftfahrzeug nach einem vorstehenden Anspruch, wobei der Propeller mindestens einer eines Rückwärtsfaltpropellers oder eines Vorwärtsfaltpropellers ist.

5. Luftfahrzeug nach einem vorstehenden Anspruch, wobei die Hydraulikmotoren mit variablem Hubraum weiter als Hydraulikmaschinen mit variablem Hubraum definiert sind.

6. Luftfahrzeug nach einem vorstehenden Anspruch, wobei die Hydraulikmotoren mit variablem Hubraum selbstkühlend sind.

7. Luftfahrzeug nach einem vorstehenden Anspruch, wobei die Hydraulikleistungsquelle ein Wellenleistungstriebwerk oder eine Brennkraftmaschine umfasst, und eine Hydraulikpumpe mit variablem Hubraum, die zwischen dem Wellenleistungstriebwerk oder der Brennkraftmaschine und der Vielzahl von Hydraulikmotoren mit variablem Hubraum verbunden ist; und/oder
wobei die Hydraulikleistungsquelle eine oder mehrere Batterien umfasst, und eine Motorpumpe mit variablem Hubraum oder eine piezohydraulische Pumpe, die zwischen der einen oder den mehreren Batterien und der Vielzahl von Hydraulikmotoren mit variablem Hubraum verbunden ist.

8. Luftfahrzeug nach einem vorstehenden Anspruch, wobei das Luftfahrzeug bemannt oder unbemannt ist.

9. Luftfahrzeug nach einem vorstehenden Anspruch, wobei:
das Luftfahrzeug (100) ein Hubschrauber ist.

10. Verfahren für verteilten Antrieb eines Luftfahrzeugs, das Folgendes umfasst:
Bestimmen mindestens von Aerodynamik, Antriebseffizienz, Struktureffizienz und Gewicht des Luftfahrzeugs;
Auswählen einer Anzahl, Größe und eines Typs von Hydraulikmotoren mit variablem Hubraum (26a bis 26f), die erforderlich sind, um verteilten Antrieb für Leistungsvorgänge des Luftfahrzeugs bereitzustellen;
Auswählen einer Leistungsquelle, die ausreichend Energiedichte aufweist, um die Hydraulikmotoren mit variablem Hubraum (26a bis 26f), die mit Propeller mit konstanter Steigung (120, 28a bis 28f) verbunden sind, mit Leistung zu versorgen, um das Luftfahrzeug zu betreiben; und
Bereitstellen eines Luftfahrzeugs nach einem der Ansprüche 1 bis 9.

11. Verfahren nach Anspruch 10, das weiter das Berechnen von Aerodynamik, Antriebseffizienz, Struktureffizienz oder Aeroelastizität und das Auswählen der Anzahl, der Leistungsausgabe und des Typs von Hydraulikmotoren, der für verteilten Antrieb verwendet wird, umfasst.

12. Verfahren nach Anspruch 10 oder Anspruch 11, das weiter das Auswählen der Hydraulikmotoren mit variablem Hubraum (26a bis 26f) basierend auf mindestens einer der Aerodynamik, Antriebseffizienz, Struktureffizienz und Aeroelastizität oder des Gewichts des Luftfahrzeugs umfasst.

## Revendications

1. Aéronef apte au décollage et à l'atterrissage vertical, au vol stationnaire et vol vers l'avant, comprenant :
une aile fermée (102), un fuselage (104) disposé au moins partiellement dans un périmètre de l'aile fermée (102), et trois ou plus rayons (106) accouplant l'aile fermée (102) au fuselage ; et
un système de propulsion distribué (10) comprenant :
une pluralité de moteurs hydrauliques à déplacement variable (132, 26a-26f) disposés dans ou attachés à l'aile fermée (102), au fuselage (104) ou aux rayons (106) dans une configuration distribuée ;
un propulseur à pas constant (120, 28a-28f) à proximité d'un bord d'attaque de l'aile fermée (102) ou des trois ou plus rayons (106), et raccordé en fonctionnement à chacun des moteurs hydrauliques à déplacement variable (132, 26a-26f) pour fournir un levage à chaque fois que l'aéronef (100) est en décollage et atterrissage vertical et en vol stationnaire et une poussée à chaque fois que l'aéronef (100) est en vol vers l'avant ;
une source de puissance hydraulique (20) disposée dans ou attachée à l'aile fermée (102), au fuselage (104) ou aux rayons (106) et accouplée à chacun de la pluralité de moteurs hydrauliques à déplacement variable (132, 26a-26f), dans lequel la source de puissance hydraulique fournit suffisamment de densité d'énergie pour que l'aéronef atteigne et maintienne des opérations de l'aéronef ;
une pluralité de dispositifs de commande (24a-24f), chaque dispositif de commande (24a-24f) étant accouplé à la source de puissance hydraulique, et à un des moteurs hydrauliques à déplacement variable (26a-26f) via un arbre mécanique (19a-19f) pour commander indépendamment une vitesse et un couple des moteurs hydrauliques à déplacement variable (26a-26f) par changement d'un déplacement des moteurs hydrauliques à déplacement variable (26a-26f) ; et
un ou plusieurs processeurs accouplés en communication à chaque dispositif de commande (24a-24f) qui commandent une opération, la vitesse et le couple de la pluralité de moteurs hydrauliques à déplacement variable (26a-26f) via les dispositifs de commande (24a-24f) de sorte qu'un couple de pas, roulis et lacet de l'aéronef soit commandé via une poussée différentielle et de vectorisation sans commande collective et cyclique de rotor.

2. Aéronef selon la revendication 1, comprenant une ou plusieurs surfaces de commande.

3. Aéronef selon la revendication 1 ou 2, dans lequel :
la source de puissance hydraulique comprend une ou plusieurs batteries, un moteur à piston, ou un turbomoteur ; et/ou
la pluralité de moteurs hydrauliques à déplacement variable comprend 2, 3, 4, 5, 6, 7, 8, 9, 10, 11, 12, 13, 14, 15, 16, 17, 18, 19, 20, 21, 22, 23, 24 ou 25 moteurs hydrauliques à déplacement variable.

4. Aéronef selon l'une quelconque des revendications précédentes, dans lequel le propulseur est au moins un parmi un propulseur à pliage arrière ou un propulseur à pliage vers l'avant.

5. Aéronef selon l'une quelconque des revendications précédentes, dans lequel les moteurs hydrauliques à déplacement variable sont définis en outre comme un moteur hydraulique à déplacement variable.

6. Aéronef selon l'une quelconque des revendications précédentes, dans lequel les moteurs hydrauliques à déplacement variable sont autorefroidissants.

7. Aéronef selon l'une quelconque des revendications précédentes, dans lequel la source de puissance hydraulique comprend un turbomoteur ou un moteur à combustion interne, et une pompe hydraulique à déplacement variable raccordée entre le turbomoteur ou le moteur à combustion interne et la pluralité de moteurs hydrauliques à déplacement variable ; et/ou
dans lequel la source de puissance hydraulique comprend une ou plusieurs batteries, et une pompe à moteur hydraulique à déplacement variable ou une pompe piézohydraulique raccordée entre les une ou plusieurs batteries et la pluralité de moteurs hydrauliques à déplacement variable.

8. Aéronef selon l'une quelconque des revendications précédentes, dans lequel l'aéronef est équipé ou non équipé.

9. Aéronef selon l'une quelconque des revendications précédentes, dans lequel :
l'aéronef (100) est un hélicoptère.

10. Procédé de propulsion distribuée d'un aéronef comprenant :
la détermination d'au moins un parmi aérodynamique, efficience propulsive, efficience structurelle, et poids de l'aéronef ;
la sélection d'un nombre, taille et type de moteurs hydrauliques à déplacement variable (26a-26f) nécessaires pour fournir une propulsion distribuée pour des opérations alimentées de l'aéronef ;
la sélection d'une source de puissance présentant suffisamment de densité d'énergie pour alimenter les moteurs hydrauliques à déplacement variable (26a-26f) raccordés à des propulseurs à pas constant (120, 28a-28f) pour actionner l'aéronef ; et
la fourniture d'un aéronef comme défini selon l'une quelconque des revendications 1 à 9.

11. Procédé selon la revendication 10, comprenant en outre le calcul de l'aérodynamique, efficience propulsive, efficience structurelle, ou aéroélasticité, et la sélection du nombre, sortie de puissance et type de moteurs hydrauliques utilisés pour la propulsion distribuée.

12. Procédé selon la revendication 10 ou la revendication 11, comprenant en outre la sélection des moteurs hydrauliques à déplacement variable (26a-26f) sur la base d'au moins un parmi aérodynamique, efficience propulsive, efficience structurelle, aéroélasticité, ou poids de l'aéronef.
